# EUROPÄISCHE PATENTSCHRIFT

(11) **EP 1 646 555 B1**
(45) Veröffentlichungstag und Bekanntmachung des Hinweises auf die Patenterteilung: **15.11.2006**
(21) Anmeldenummer: 04741076.6
(22) Anmeldetag: 15.07.2004
(51) Int. Cl.: B64C 1/20, B64C 1/22, B64C 1/00, B64D 9/00

(54) **FRACHTDECK SOWIE VERFAHREN ZUR MONTAGE**
CARGO DECK AND A METHOD FOR ASSEMBLING SAID DECK
PONT A FRET ET SON PROCEDE DE MONTAGE

(30) Priorität: 18.07.2003 DE 10332798; 27.08.2003 DE 10339507; 27.08.2003 DE 10339508; 08.03.2004 DE 102004011163; 08.03.2004 DE 102004011164
(43) Veröffentlichungstag der Anmeldung: 19.04.2006
(73) Patentinhaber: Telair International GmbH, 83714 Miesbach (DE)
(72) Erfinder: HUBER, Thomas, 83727 Schliersee (DE); HOLZNER, Richard, 83026 Rosenheim (DE)
(74) Vertreter: Bohnenberger, Johannes
(86) Internationale Anmeldenummer: PCT/EP2004/007920
(87) Internationale Veröffentlichungsnummer: WO 2005/012083

(56) Entgegenhaltungen:
- DE-A- 2 162 042
- DE-U- 20 122 116
- US-A- 3 381 921
- US-A- 3 612 316

## Beschreibung

Die Erfindung betrifft ein Frachtdeck nach dem Oberbegriff des Patentanspruches 1 sowie ein Verfahren zur Montage eines solchen Frachtdecks.

Aus der DE AS 21 62 042 ist ein derartiges Frachtdeck bekannt, bei welchem im Bereich - einer Laderaumtür eine Vielzahl von Kugelmatten, PDUs und derlei Funktionselementen einen ersten Abschnitt des Frachtdecks bilden. An diesen Eingangsbereich schließt sich eine Vielzahl von Bodenpaneelen an, zwischen bzw. auf denen Rollenbahnen, Riegelelemente und weitere PDUs angeordnet ist, so dass Frachtstücke, z.B. Container zur Frachtraumtür hinein und dann in einer Längsrichtung des Flugzeugs an ihre endgültige Stauposition gefahren werden können. In den Staupositionen werden die Container mittels Riegelelementen verankert.

Bei den herkömmlich aufgebauten Frachtdecks werden nun zunächst in den Rumpf des Flugzeugs Querträger eingebaut, auf welche dann Profilelemente zur Aufnahme der Riegel, PDUs oder Transportrollen und zwischen diesen Bodenpaneele bzw. Kugelmatten montiert werden. Im Bereich der Tür des Frachtraums wird ein noch höherer Aufwand getrieben. Hier wird eine Art Tisch montiert, auf welchem die genannten Funktionselemente (PDUs, Riegel usw.) angeordnet sind und auf dem die Kugelmatten (unter Freilassung der PDUs usw.) montiert werden. In jedem Fall also werden zunächst Stützstrukturen am Flugzeugrumpf befestigt auf denen dann die den Frachtraumboden bildenden Strukturen montiert werden. Der herkömmliche Aufbau des Frachtdecks ist somit aufwändig und führt auch zu einem hohen Gewicht.

Der Erfindung liegt die Aufgabe zu Grunde, ein Frachtdeck (Anspruch 1) sowie ein Verfahren (Anspruch 11) zum Herstellen eines solchen aufzuzeigen, das einen verminderten Aufwand sowohl hinsichtlich Konstruktion als auch Fertigung als auch Einbau im Flugzeug sicherstellt.

Diese Aufgabe wird bei einem Frachtdeck zur Aufnahme von Ladung im Frachtraum eines Flugzeugs, an dessen Außenhaut Spanten befestigt sein können, dadurch gelöst, dass das Frachtdeck aus einer Vielzahl von Bodenmodulen aufgebaut ist, die im Frachtraum befestigt sind und das Frachtdeck bilden, wobei an der Außenhaut oder den Spanten Längsträger befestigt sind, an denen die Bodenmodule montierbar sind.

Ein wesentlicher Gedanke der Erfindung liegt darin, dass einerseits nicht mehr der herkömmliche Aufbau gewählt wird, bei welchem die Querträger jeweils einzeln im Flugzeugrumpf befestigt und auf diesen dann die den Frachtraumboden bildenden Elemente montiert werden. Vielmehr werden Module aufgebaut, welche Abschnitte des Frachtdecks einschließlich den dazu gehörigen Stützstrukturen (Querträgern) umfassen, die dann insgesamt an den Längsträgern montiert werden. Dadurch ergibt sich nicht nur ein erheblich vereinfachter Aufbau des Frachtdecks, da die Module außerhalb des Flugzeugrumpfes (vor-) montierbar sind, vielmehr ergibt sich eine erhebliche Vereinfachung auch dadurch, dass die Module nicht direkt an der Außenhaut bzw. an den Spanten sondern eben an den Längsträgern befestigt werden. Während nämlich bei der Fertigung des Flugzeugrumpfes die Abstände der Spanten einer gewissen Fertigungstoleranz unterliegen, können die Längsträger außerhalb des Flugzeugrumpfes und damit hochgenau gefertigt werden. Dies bedeutet, dass die entsprechenden Befestigungseinrichtungen zum Befestigen der Module an den Längsträgern präzise anbringbar sind, so dass beim Einbau der Module in den Flugzeugrumpf die gesamte Anordnung passgenau montierbar ist.

Vorzugsweise bestehen die Längsträger aus einem Material, dessen Temperaturausdehnungskoeffizient im Wesentlichen demjenigen der Außenhaut entspricht. Dies ist insbesondere dann wichtig, wenn die Außenhaut des Flugzeugs aus einem Verbundmaterial, z.B. aus kohlefaserverstärktem Kunststoff besteht, also aus einem Material, das sehr leicht ist. Andererseits ist dieses Material nur relativ schlecht geeignet, um einen Frachtraumboden aufzubauen, da es relativ empfindlich gegenüber Schlägen in lokal begrenzten Bereichen ist. Der Frachtraumboden wird somit vorzugsweise aus Leichtmetall, insbesondere aus Aluminiumbauteilen aufgebaut. Die Module können nun wiederum an den Längsträgern so befestigt werden, dass relative Längenänderungen der Längsträger gegenüber den Modulen (z.B. durch entsprechende Toleranzen der Befestigungselemente) aufgefangen werden. Bei der Aufnahme der Vertikallasten spielen solche Toleranzen keine Rolle. Zur Aufnahme von Lasten in Flugzeuglängsrichtung wiederum werden die Module nur an jeweils zwei Punkten mit der Außenhaut verbunden, die auf einander entgegengesetzten Seiten des Frachtraumes liegen.

Die Längsträger und/oder die Spanten sind vorzugsweise mit Bohrungen, Schnellverschlusselementen oder dergleichen Befestigungseinrichtungen zum Befestigen der Bodenmodule versehen, so dass diese genannte einfache Befestigungsmethode möglich ist.

Die Bodenmodule sind derart an den Längsträgern befestigt, dass im Wesentlichen keine Kräfte in Längsrichtung des Flugzeugs von den Bodenmodulen in die Längsträger einleitbar sind.

Vorzugsweise ist ein einzelnes Paar von Längsträgern zur Verbindung mit den Bodenmodulen vorgesehen, also an jeder Seite des Frachtraums ein Längsträger.

An den Bodenmodulen sind vorzugsweise Querträger zur Befestigung der Bodenmodule an den Längsträgern vorgesehen, so dass exakt definierbare Befestigungspunkte vorgegeben sind. Die Bodenmodule bzw. die Querträger der Bodenmodule weisen Stützfüße zur Befestigung an den Spanten auf. Im Allgemeinen werden zwei derartige Stützfüße zur Erzielung einer hinreichenden Stabilität genügen, jedoch sind auch größere Anzahlen von Stützfüßen selbstverständlich möglich. Bei der Befestigung der Stützfüße an den Spanten spielen die genannten Fertigungstoleranzen keine wesentliche Rolle, da die Stützfüße in Richtung der Flugzeuglängsachse elastisch ausgebildet sein können und so Fertigungsunterschiede leicht ausgleichbar sind. Die Stützfüße sind nämlich praktisch ausschließlich zur Aufnahme von Vertikallasten notwendig, während alle anderen Kraftrichtungen über die Längsträger bzw. die genannten Befestigungspunkte in die Außenhaut geleitet werden.

Vorzugsweise umfassen die Spanten zur Befestigung der Module und/oder der Längsträger Befestigungselemente, die entweder in einer Zone zwischen der Außenhaut und einem in den Frachtraum gerichteten Randbereich der Spanten an den Spanten oder bohrungsfrei am Randbereich der Spanten angebracht sind. Auf diese Weise wird sichergestellt, dass die Spanten ihre Funktion zur Versteifung der Außenhaut trotz Montage der Module bzw. der Längsträger beibehalten.

Vorzugsweise werden die Module in Bezug auf Kräfte in Längsrichtung des Flugzeugs voneinander entkoppelt. Dadurch wird eine weitere Verbesserung beim Auffangen von thermisch bedingten Längenänderungen ebenso erzielt wie eine Erhöhung der Montagetoleranz.

Weiterhin wird die genannte Aufgabe durch ein Verfahren zur Montage eines aus Bodenmodulen bestehenden Frachtdecks in einem Flugzeug gelöst, wobei das Flugzeug aus mehreren tonnenförmigen Rumpfabschnitten einer durch Spanten verstärkten Außenhaut zusammengebaut wird, wobei das Verfahren mindestens folgende Schritte aufweist:
a) Herstellen von Bodenmodulen;
b) Herstellen von Längsträgern einschließlich eines Anbringens von Bohrungen, Schnellverschlusselementen oder dergleichen Befestigungseinrichtungen zum Befestigen der Bodenmodule an den Längsträgern;
c) Befestigen von Abschnitten der Längsträger in den Rumpfabschnitten;
d) Einsetzen der Bodenmodule in die Rumpfabschnitte und Befestigen derselben an den Längsträgern.

Ein wichtiger Gedanke des so ausgebildeten Verfahrens liegt somit darin, dass einerseits die Bodenmodule außerhalb des Flugzeugrumpfes gefertigt werden können, andererseits der Einbau der Bodenmodule äußerst einfach wird, da lediglich die (leichten) und ebenfalls außerhalb des Flugzeugrumpfes zu fertigenden Längsträger den Einbau der Module sehr leicht machen. Die Befestigung der Längsträger im Flugzeugrumpf wiederum ist ebenfalls aufgrund deren geringem Gewicht und aufgrund deren einfachen Aufbaues sehr unkompliziert.

Vorzugsweise weisen die Längsträger eine Länge auf, die nicht größer ist als die der Rumpfmodule. Dadurch können die Rumpfmodule im Wesentlichen vollständig voneinander getrennt aufgebaut und erst in einem finalen Zusammenbauschritt miteinander verbunden werden. Der Transport derartiger Rumpfabschnitte (im Fachjargon Barrels genannt) kann an verschiedenen Orten erfolgen, wie dies insbesondere bei der Kooperation von mehreren, an einem solchen Großprojekt beteiligten Firmen üblich ist.

Vorzugsweise werden nach dem oben genannten Schritt d) in einem weiteren Schritt e) Füße der Querträger der Bodenmodule an den Spanten befestigt. Diese Befestigung ist relativ einfach, da die Bodenmodule schon im Wesentlichen am richtigen Platz (oder sogar an den Längsträgern fixiert) sind und somit zumindest eine Vertikalpositionierung bereits in korrekter Weise vorliegt.

Vorzugsweise werden nach dem Schritt e), also nachdem die Module bereits im Rumpf fixiert sind, Lining- und Ceiling-Elemente, also Wand- und Deckenverkleidungen in die Rumpfabschnitte eingeschoben und dort befestigt. Die Lining- und Ceiling-Elemente sind vorzugsweise hierbei miteinander verbunden, so dass gesonderte Fixierung dieser beiden Elemente gegeneinander bei der Endmontage entfallen kann.

Die Bodenmodule können nicht nur in die Rumpfabschnitte eingebaut werden, solange diese noch voneinander getrennt sind, es ist vielmehr möglich und bei entsprechender Wahl der Rumpfabschnittslängen auch notwendig, zumindest einige der Bodenmodule nach einem Zusammenbau der Rumpfabschnitte einzubauen. Vorzugsweise werden hierbei die Module und gegebenenfalls auch die Lining- und Ceiling-Elemente so dimensioniert, dass sie durch die Frachtraumtür eingeladen, an die jeweiligen Bestimmungsorte transportiert und dort befestigt werden können.

Vorzugsweise werden die Bodenmodule noch außerhalb des Flugzeugs, also vor dem Schritt d) mit Leitungsabschnitten für Fluide und/oder Strom oder Kanälen zum Verlegen von Leitungen oder dergleichen Installationseinrichtungen versehen, die dann nach dem Schritt d) miteinander verbunden werden. Auch hier ist leicht verständlich, dass die Vormontage außerhalb des Flugzeugs erhebliche Arbeitserleichterungen bei der Endmontage mit sich bringt.

Vorzugsweise werden mindestens Teile von Floorpanels, Kugelmatten oder dergleichen Deckabschnitten der Module nach dem Schritt e) an den Modulen befestigt. Dadurch ist es möglich, den Bilgenraum (unter dem Frachtdeck) für gegebenenfalls auszuführende Montagen freizuhalten.

Nachfolgend wird die Erfindung anhand von Abbildungen näher erläutert. Hierbei zeigen
- - Fig. 1: eine perspektivische Ansicht eines Rumpfabschnittes eines Flugzeugs,
- - Fig. 2: eine perspektivische Ansicht eines Frachtladeraums mit teilmontierten Deckabschnitten,
- - Fig. 3 und 4: perspektivische Ansichten zur Montage von Profilelementen an Querträgern,
- - Fig. 5: eine perspektivische Ansicht eines Bodenmoduls von oben,
- - Fig. 6: das Bodenmodul nach Fig. 5 in perspektivischer Ansicht von unten,
- - Fig. 7: eine perspektivische Abschnittsdarstellung der Montage eines Querträgers im Flugzeug,
- - Fig. 8 und 9: perspektivische Darstellungen aus verschiedenen Blickrichtungen auf Profilelemente und Zwischenelemente,
- - Fig. 10: die Anordnung nach den Fig. 8 und 9 in einer teilgeschnittenen Vorderansicht,
- - Fig. 11-13: Ansichten entsprechend denen nach den Fig. 8-10 auf eine zweite Ausführungsform von Zwischenelementen,
- - Fig. 14: zwei voneinander getrennte Rumpfabschnitte mit einem einzubauenden Bodenmodul und einem Lining-/Ceiling-Modul,
- - Fig. 15 - 20: weitere Darstellungen ähnlich der nach Fig. 14 zur Erläuterung weiterer Einbauschritte,
- - Fig. 21: eine perspektivische Darstellung zur Erläuterung der Befestigung der Querträger an der Außenhaut,
- - Fig. 22: eine perspektivische Darstellung ähnlich der nach Fig. 21 jedoch aus einem anderen Blickwinkel,
- - Fig. 23: eine Frontansicht der Ausführungsform nach den Fig. 21 und 22,
- - Fig. 24: eine Detailansicht des Ausschnittes XXIV aus Fig. 23,
- - Fig. 25: eine Detailansicht des Ausschnittes XXV aus Fig. 23,
- - Fig. 26: eine perspektivische Detaildarstellung des Abschnittes XXVI aus Fig. 22,
- - Fig. 27: eine Detailansicht des Ausschnittes XXVII aus Fig. 22,
- - Fig. 28 - 34: Darstellungen entsprechend denen nach den Fig. 21 - 27 jedoch einer weiteren Ausführungsform der Erfindung und
- - Fig. 35 - 41: eine Darstellung entsprechend denen nach den Fig. 21 - 27 bzw. 28 - 34 jedoch noch einer weiteren Ausführungsform der Erfindung.

In der nachfolgenden Beschreibung werden für gleiche und gleich wirkende Teile dieselben Bezugsziffern verwendet.

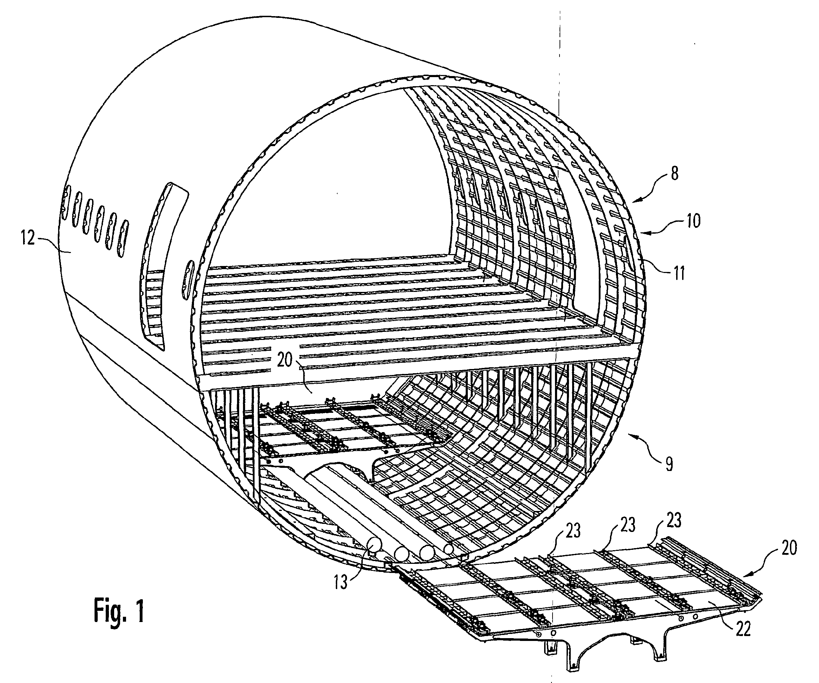

Gemäß Fig. 1 ist (bekanntlich) ein Flugzeugrumpf 10 in einen oberen Abschnitt 8 zur Verwendung als Passagierraum und einen unteren Abschnitt zur Bildung eines Frachtraums 9 unterteilt. Der Flugzeugrumpf 10 wird durch eine Außenhaut 12 gebildet, zu deren Verstärkung auf der Innenseite Spanten 11 angebracht sind. Die Außenhaut und die Spanten können aus Leichtmetall oder aber aus einem Verbundwerkstoff bestehen.

Im Frachtraum 9 werden Deckabschnitte 20 montiert, die zusammen ein Frachtdeck bilden. In der Bilge (unter den Deckabschnitten 20) sind Installationskanäle 13, Leitungen usw. angeordnet, die zur Versorgung sowohl des Passagierraums als auch des Frachtraums mit Fluiden (Luft, Wasser, Abwasser usw.) oder Strom (zur Energieversorgung, Datenübertragung usw.) dienen.

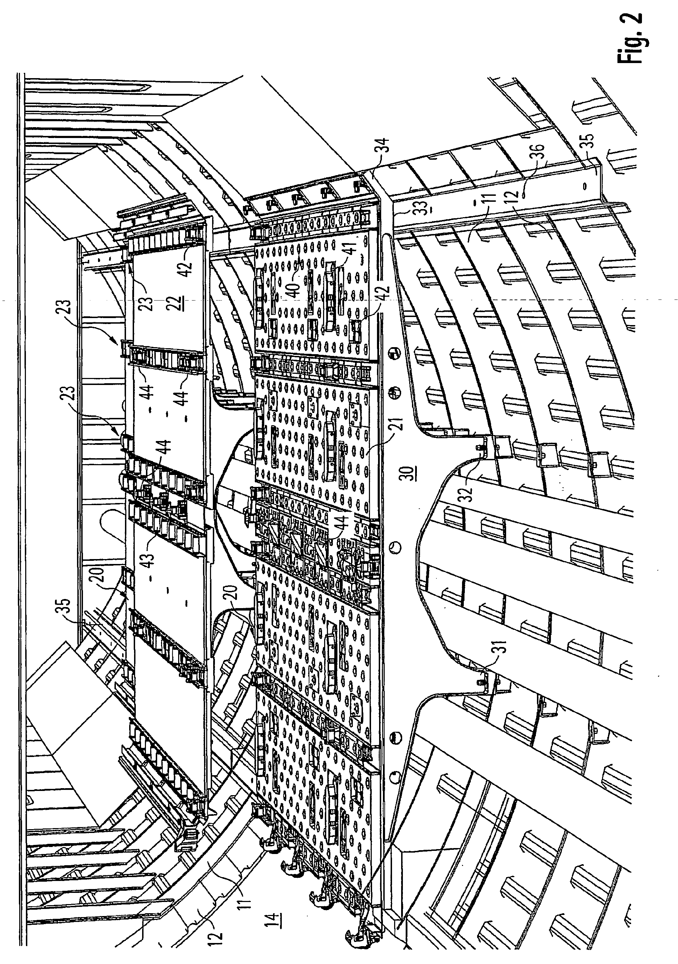

Wie aus Fig. 2 hervorgeht, sind die Deckabschnitte 20 einerseits aus flächigen Eiementen, z.B. Bodenpaneelen 22 oder Kugelmatten 21 gebildet, die über parallel zur Flugzeuglängsachse verlaufende Profilelemente 23 miteinander verbunden sind. Diese flächigen Elemente 21, 22 sind vorzugsweise mit den Profilelementen 23 verschraubt oder vernietet, so dass eine über die gesamte Breite des Deckabschnittes 20 starre Struktur entsteht. In den Profilelementen 23 ist eine Vielzahl von Funktionselementen, z.B. PDUs 42 (Rollenantriebseinheiten), Transportrollen 43 oder Riegel 44 befestigt. Im Bereich einer Frachtraumtür 14, also im Bereich der Kugelmatten 21 sind darüber hinaus Kugelelemente 40, Führungselemente 41 sowie eine Vielzahl von weiteren PDUs 42 und Riegel 44 angebracht, wie dies an sich bekannt ist.

Zur Versteifung und Übertragung vertikaler Lasten der Deckabschnitte 20 sind unterhalb der flächigen Elemente 21, 22 und Profilelemente 23 Querträger 30 vorgesehen, die Füße 31, 32 und randseitige Auflagen 33 aufweisen. Die Füße 31, 32 der Querträger 30 sind an Spanten 11 befestigt, während die Auflager 33 auf Längsprofilen 35 aufliegen, die entlang einer außenliegenden Zone des Flugzeugrumpfes an den Spanten 11 befestigt sind. Weiterhin weisen die Querträger 30 außenseitige Kragen 34 auf, an denen weitere Führungselemente für aufzunehmende Container befestigt sind.

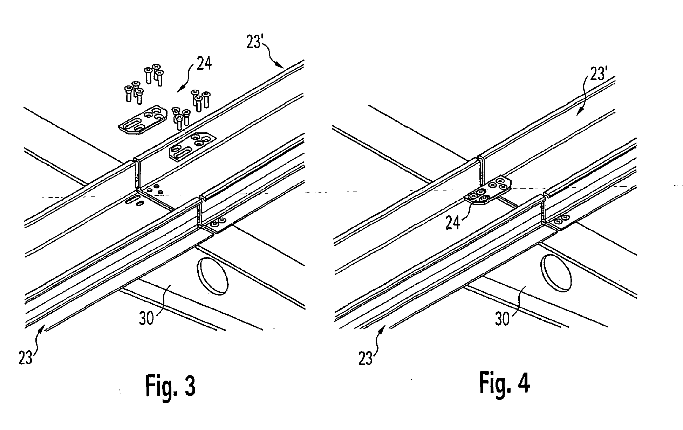

Die Deckabschnitte 20 werden nach dem Einbau im Laderaum über die Profilelemente 23 miteinander verbunden, wie dies in den Fig. 3 und 4 gezeigt ist. Hierfür vorgesehene Verbindungselemente 24 weisen Langlöcher auf, so dass zwei aneinander gekoppelte Deckabschnitte 20 jeweils gegeneinander in Richtung der Flugzeuglängsachse in gewissen Maßen verschiebbar sind.

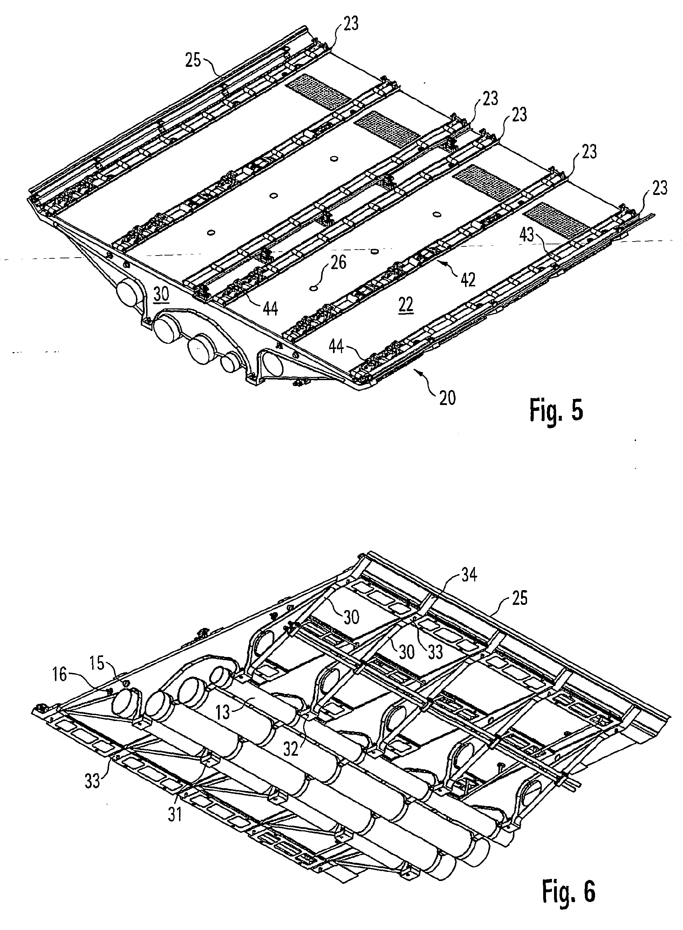

Die in den Fig. 5 und 6 gezeigten Deckabschnitte 20 bilden kompakte Module, die einerseits aus den über die Profilelemente 23 miteinander verbundenen flächigen Abschnitten 21 bzw. 22 und andererseits den Querträgern 30 bestehen. Darüber hinaus können diese Module abschnittsweise mit den Installationskanälen 13 sowie Drainageleitungen 16 (zum Entwässern des Frachtdecks) oder auch mit elektrischen Leitungen versehen sein, die über Verbindungsstecker 15 zwischen den Modulen miteinander verbindbar sind.

Die so gebildeten modulförmigen Deckabschnitte sind nun aufgrund der starren Verbindung zwischen den flächigen Abschnitten 21, 22 und den Profilelementen 23 derart gegenüber Scherkräften steif ausgebildet, dass beispielsweise über Riegel 44 in der Mitte eines Deckabschnitts (siehe Fig. 5) eingetragene Längskräfte nach außen, in Richtung zu Randprofilen 25 bzw. den nahe diesen vorgesehenen Profilelementen 23 übertragen werden. Von dort werden diese Längskräfte - wie dies weiter unten näher beschrieben wird - auf die Flugzeughaut übertragen.

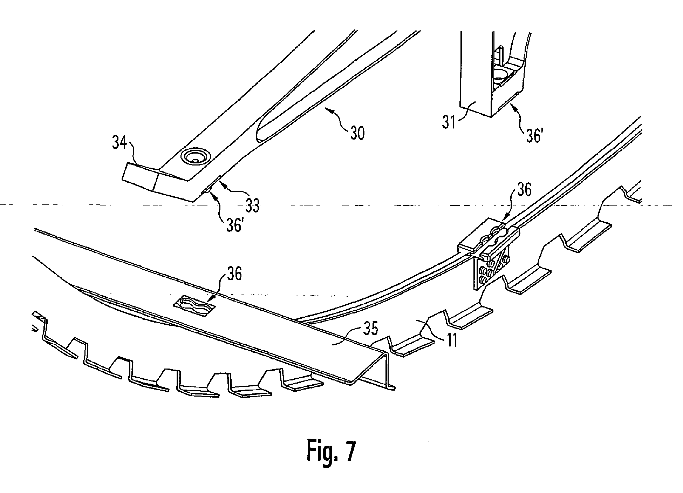

In Fig. 7 ist gezeigt, wie bei der Montage der Deckabschnitte oder Module im Frachtraum die Querträger 30 mit den Spanten 11 bzw. den Längsprofilen 35 verbunden werden. Hierzu sind einerseits an den Spanten 11 und den Längsprofilen 35 Befestigungselemente 36 vorgesehen, wie sie beispielsweise zur Befestigung von Flugzeugsitzen bekannt und erprobt sind. Andererseits sind an den Füßen 31 bzw. den Auflagern 33 der Querträger 30 entsprechende Gegen-Befestigungselemente 36' vorgesehen. Dies bedeutet, dass bei der Montage eines Deckabschnitts bzw. Modules im Frachtraum das Modul lediglich in den Frachtraum hineingehoben und dort mittels der Befestigungselemente 36, 36' fixiert werden muss. Das Fixieren der Querträger 30 an den Längsprofilen 35 kann von oben geschehen während zum Fixieren der Füße 31 an den Spanten 11 entweder Zugangsöffnungen 26 (siehe Fig. 5) in den Bodenpaneelen 22 oder den Kugelmatten 21 vorgesehen sind oder an den wichtigen Stellen diese Elemente während der Montage noch nicht fest mit den Profilelementen verbunden sind.

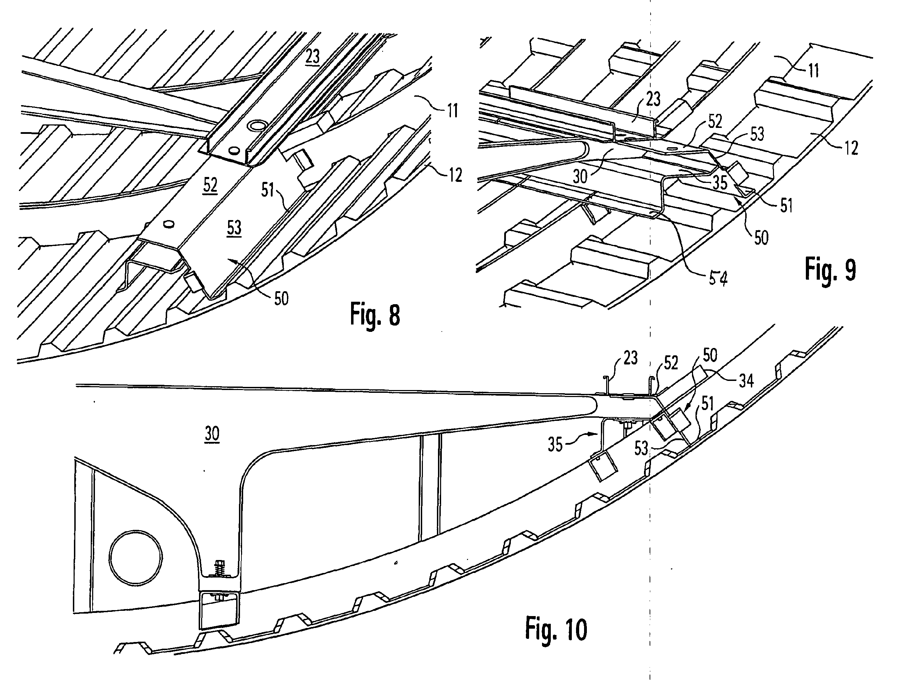

Zur Überleitung der Längskräfte von den Deckabschnitten 20 zur Außenhaut 12 des Flugzeugrumpfes 10 sind nun Zwischenelemente 50 vorgesehen, die nachfolgend anhand der Fig. 8 - 10 näher erläutert werden. Diese Zwischenelemente 50 weisen einerseits ein Außenkoppelstück 51, z.B. einen bandförmigen Bereich auf, der an der Außenhaut 12 zwischen zwei Spanten 11 z.B. durch Kleben oder Nieten starr befestigt ist. Weiterhin weist das Zwischenelement 50 ein Innenkoppelstück 52 auf, welches zugfest (in Richtung der Flugzeuglängsachse) mit dem randseitigen Profilelement 23 eines Deckabschnittes 20 verbunden ist. Das zwischen dem Innenkoppelstück 52 und dem Außenkoppelstück 51 vorgesehene Verbindungsstück 53 ist wiederum gegenüber Scherkräften steif, gegenüber Biegekräften jedoch relativ nachgiebig, so dass Kräfte in Richtung der Profilelemente 23, also in Längsrichtung des Flugzeugrumpfes 10 von den Profilelementen 23 über die Zwischenelemente 50 auf die Außenhaut 12 übertragen werden, während hierzu senkrechte Kräfte, also nach unten und nach außen wirkende Kräfte nur in ganz geringem Maße auf die Außenhaut 12 übertragen werden. Die Montage der Zwischenelemente 50 lässt sich dann besonders einfach gestalten, wenn diese Außenlappen 54 aufweisen, über welche die Zwischenelemente 50 an den Spanten 11 befestigt sind.

Die Zwischenelemente 50 sind nun sehr kurz im Verhältnis zur Gesamtlänge (in Flugzeuglängsrichtung) der Deckabschnitte 20 ausgebildet und im hier gezeigten Ausführungsbeispiel an nur jeweils einem Ende eines außenseitigen Profilelementes 23 eines Deckabschnitts 20 vorgesehen. Auf diese Weise wird sichergestellt, dass bei unterschiedlichen Materialdehnungen z.B. durch Temperaturunterschiede und unterschiedliche Ausdehnungskoeffizienten bei verschiedenen Materialien von Außenhaut 12 und Deckabschnitten 20 keine Spannungen zwischen der Außenhaut und den Deckabschnitten 20 auftreten können. In Flugzeuglängsrichtung ist somit das eine Ende eines jeden Deckabschnittes 20 am Flugzeugrumpf 10 fixiert während sein anderes Ende in Längsrichtung des Flugzeugs schwimmend gelagert ist. Lediglich zur Flugzeuglängsachse senkrechte Kräfte werden über die gesamte Länge der Deckabschnitte 20 in den Flugzeugrumpf 10 abgeleitet.

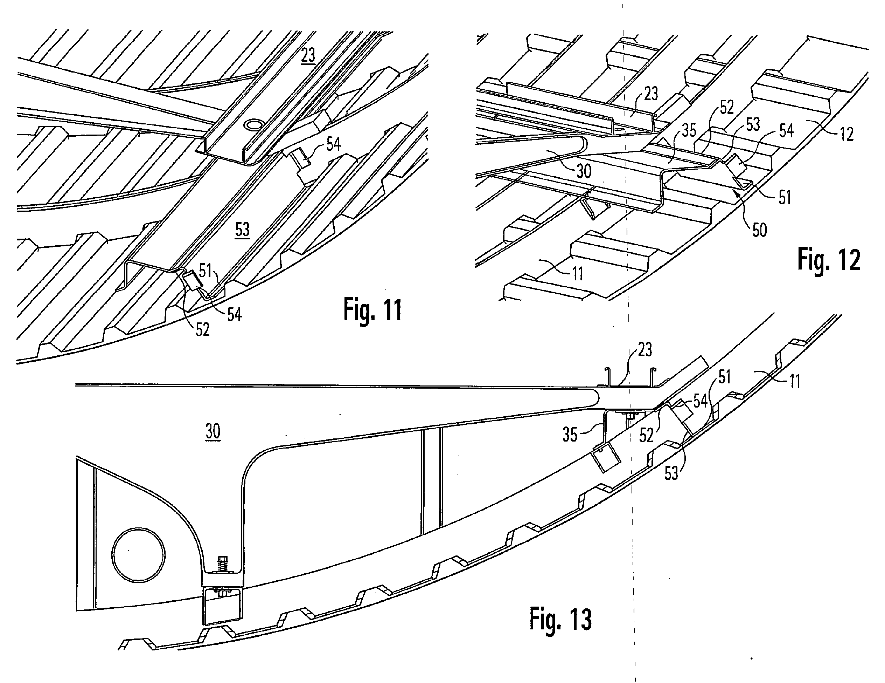

Die in den Fig. 11 - 13 gezeigte Ausführungsform der Erfindung unterscheidet sich dadurch von der nach den Fig. 8 - 10, dass die Zwischenelemente 50 an die Längsprofile 35 angekoppelt sind, auf denen die Deckabschnitte 20 mit den Auflagern 33 ihrer Querträger 30 sitzen, auf welchen wiederum die Profilelemente 23 montiert sind. Bei dieser Anordnung werden die Längskräfte somit nicht direkt in die Zwischenelemente 50 sondern über Endabschnitte der Querträger 30 und Abschnitte der Längsprofile 35 auf die Zwischenelemente 50 und damit auf die Außenhaut 12 übertragen. Funktionell stellt dies allerdings keinen Unterschied zur Ausführungsform nach den Fig. 8-10 dar, da auch bei dieser Ausführungsform über die gesamte Breite der Deckabschnitte 20 aufgebrachte Längskräfte nach außen in die dort angebrachten äußersten Profilelemente 23 geleitet und von diesen (im Wesentlichen punktförmig) abgenommen und über die Zwischenelemente 50 auf die Außenhaut 12 übertragen werden. Auch hier sind somit die Querträger 30 nicht direkt an der Übertragung der Längskräfte beteiligt und können somit gegenüber derartigen Kräften nachgiebig bzw. schwach ausgebildet sein.

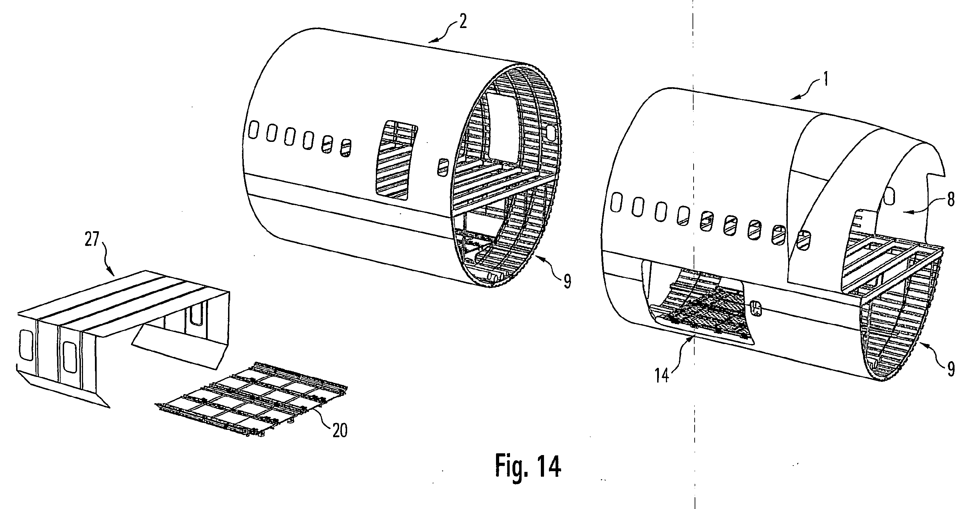

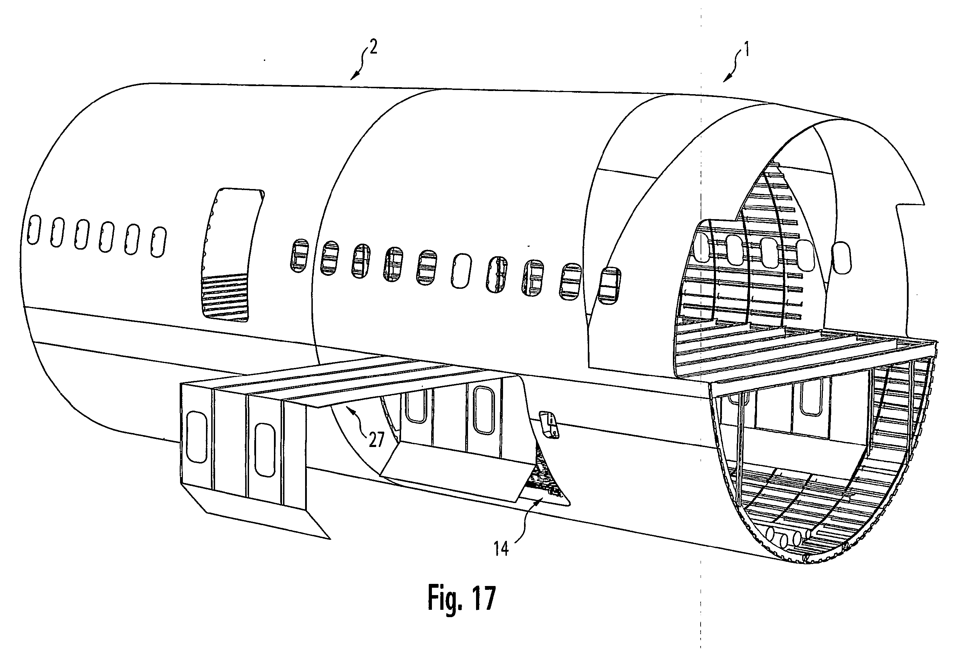

Nachfolgend wird die Montage anhand der Fig. 14 - 20 näher erläutert.

Wie in Fig. 14 gezeigt, wird das Flugzeug aus mehreren Rumpfabschnitten aufgebaut, wobei hier lediglich zwei Rumpfabschnitte gezeichnet sind. Der in Fig. 14 vordere Rumpfabschnitt 1 beinhaltet die Frachtraumtür 14, während der zweite Rumpfabschnitt 2 nach hinten anschließt. In diese Rumpfabschnitte werden der in Fig. 14 gezeigte Deckabschnitt sowie der Lining-/Ceiling-Abschnitt 27 eingebaut.

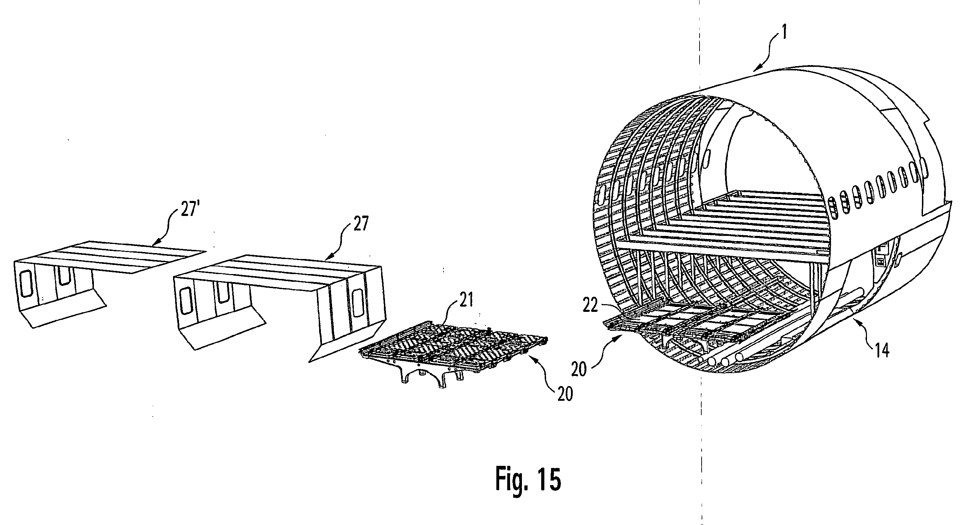

In Fig. 15 ist der erste Rumpfabschnitt 1 gezeigt, in welchen gerade ein Deckabschnitt 20 bzw. ein solches Modul mit Bodenpaneelen 22 eingesetzt wird. Ein Modul 20 mit Kugelmatten 21 ist zur Verdeutlichung noch herausgezeichnet. Weiterhin ist ein Lining-/Ceiling-Element 27 (wie in Fig. 14) gezeigt, das außerhalb der Frachtraumtür 14 montiert wird und das zwei Seitenwände aufweist, während das in Fig. 15 mit 27' bezeichnete Lining-/Ceiling-Element für den Einbau im Türbereich gedacht ist.

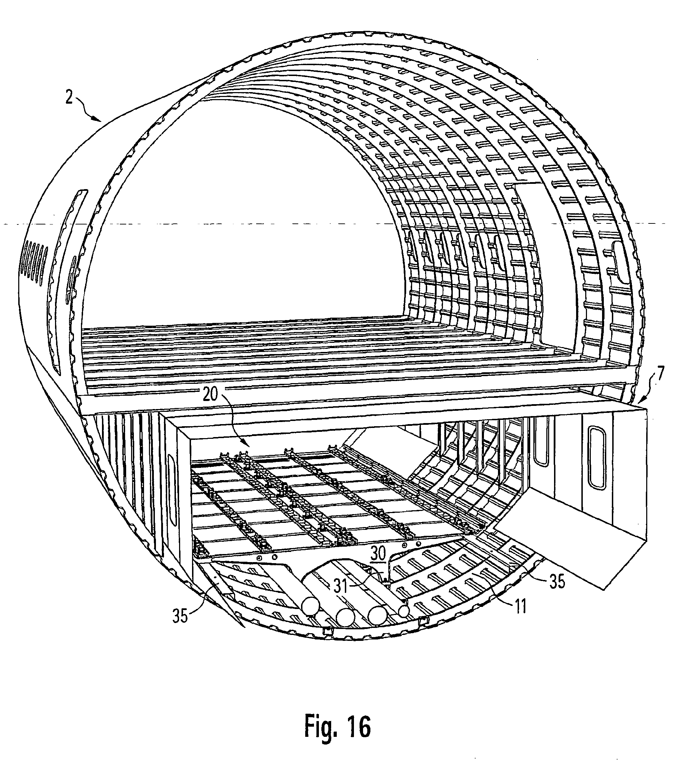

In Fig. 16 ist gezeigt, wie ein Modul 20 in den Rumpfabschnitt 2 hineingeschoben wird, um dort auf die Randprofile 25 aufgelegt und an ihnen (wie in Fig. 7 genauer gezeigt) mittels der Befestigungselemente 36, 36' befestigt zu werden. Die Füße 31 des Querträgers 30 werden an den Spanten 11 befestigt. Nach dieser Befestigung wird das Lining-/Ceiling-Element 27 in den Rumpfabschnitt 2 eingeschoben und ebenfalls befestigt.

Das Einbauen und natürlich auch wieder ein Ausbauen zum Austausch oder auch beim Neueinbau des Lining-/Ceiling-Elements kann durch die Frachtraumtür 14 erfolgen.

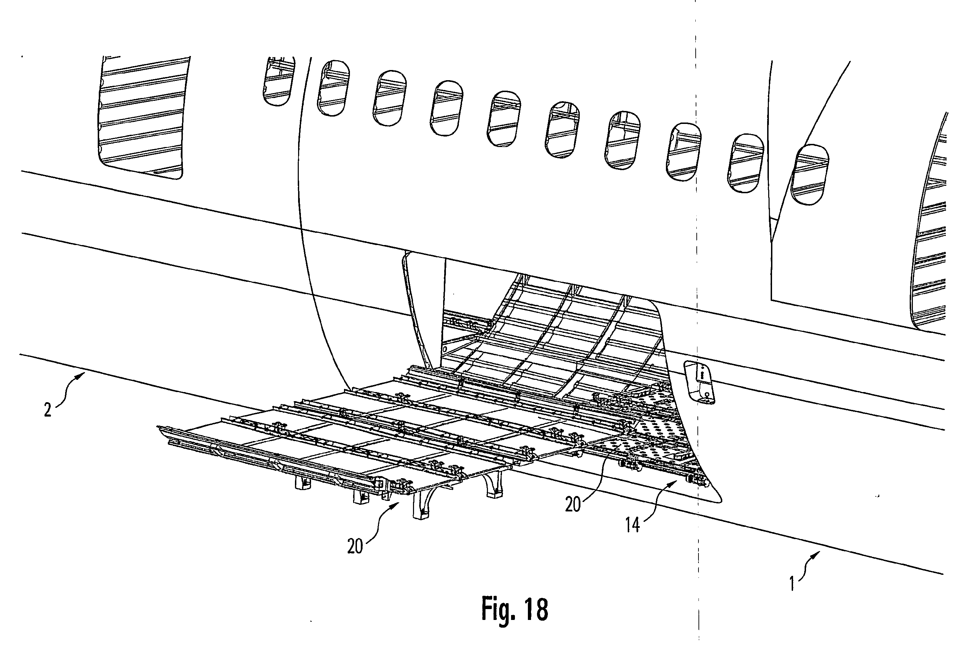

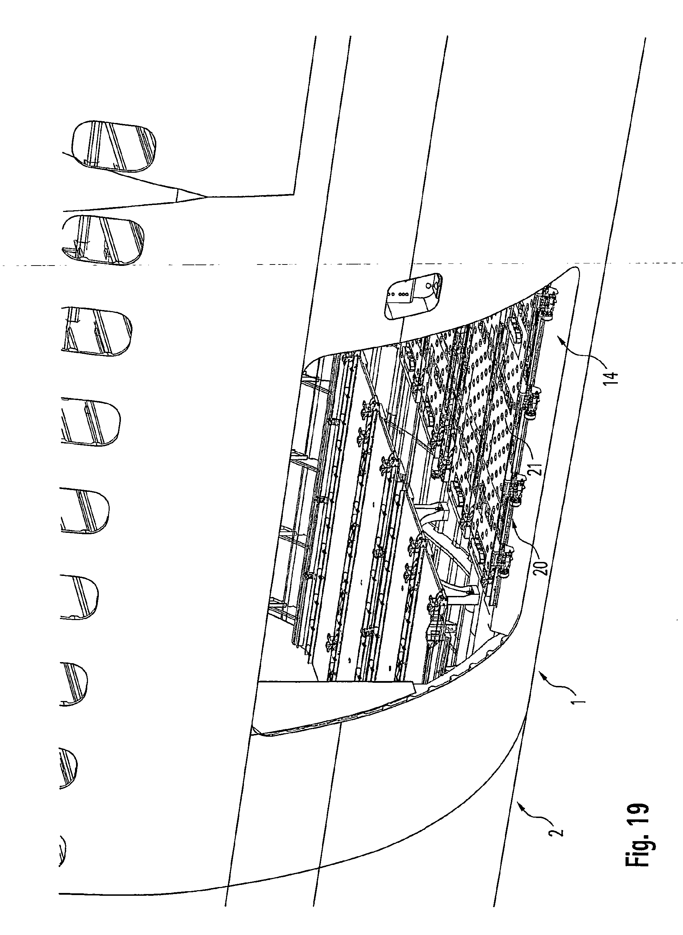

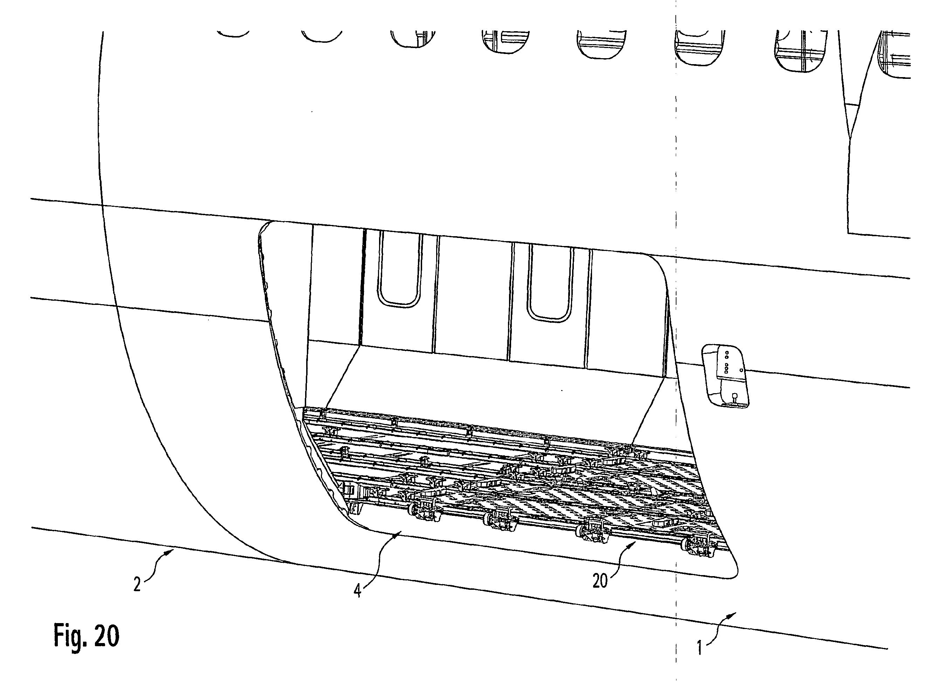

Dies gilt selbstverständlich genauso für die Deckabschnitte bzw. Module, wie dies in Fig. 18 gezeigt ist. Insbesondere wird hierbei - wie in Fig. 19 gezeigt - zu einem Zeitpunkt, zu welchem die hier gezeigten Rumpfabschnitte 1 und 2 bereits zusammengefügt sind, zunächst ein Modul 20 mit Kugelmatten 21 im Bereich der Frachtraumtür 14 montiert und danach ein anschließendes Modul (wie in Fig. 18 gezeigt) durch die Frachtraumtür 14 eingeladen und - wie in Fig. 19 gezeigt - über das schon eingebaute Modul 20 verschoben und schließlich - wie in Fig. 20 gezeigt - an seinem Platz im Frachtraum befestigt.

Nachfolgend wird eine weitere Anbringungsart der Querträger 30 bzw. Längsprofile 35 an der Außenhaut erläutert. An dieser Stelle sei betont, dass die in der vorliegenden Beschreibung und in den Zeichnungen gezeigte Außenhaut auch "kompakt", z.B. in Sandwich Bauweise derart ausgeführt sein kann, dass man die Spanten 11 bzw. die in den Zeichnungen gezeigten (üblichen) Längsversteifungen der Außenhaut 12 zumindest von außen nicht mehr erkennen kann (falls sie als Strukturen überhaupt vorhanden sind), da sich dann eine auch innen "glatte" Außenhaut ergibt.

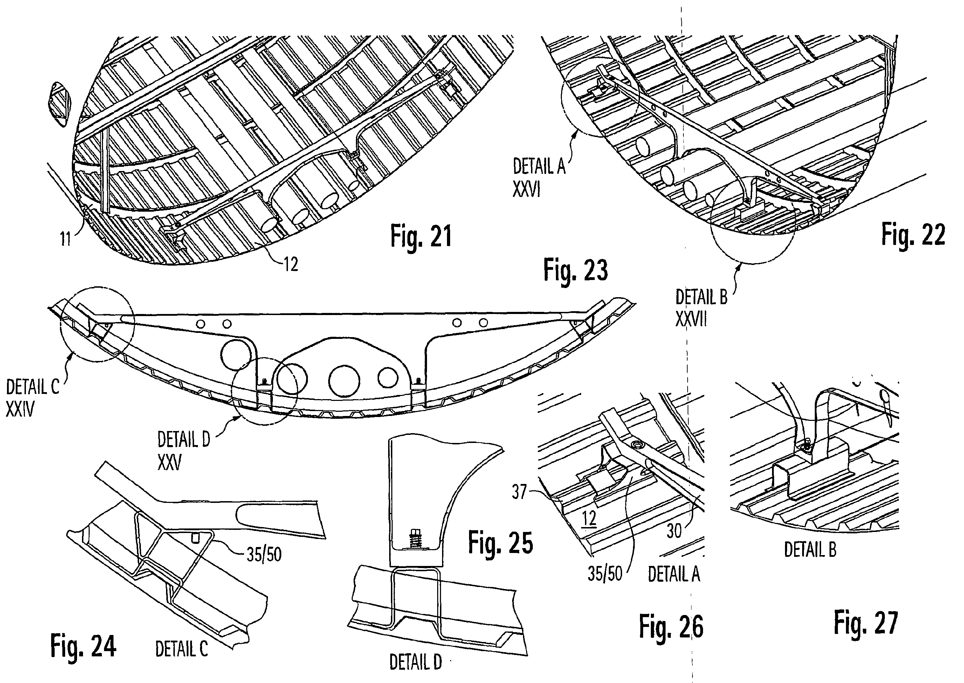

Die in den Fig. 21 - 27 gezeigte Ausführungsform zeichnet sich dadurch aus, dass die Längsprofile 35 bzw. Abschnitte hiervon, die somit als Zwischenelemente 50 dienen, jeweils eine Längsversteifung 37 überspannen, um dann mit der Außenhaut 12 verbunden zu werden. Auch hier können die Längsträger 35 bei entsprechender Formgebung die gesamte Länge des Flugzeugs durchspannen oder aber als Kurzabschnitte (wie in den Abbildungen gezeigt) ausgebildet sein.

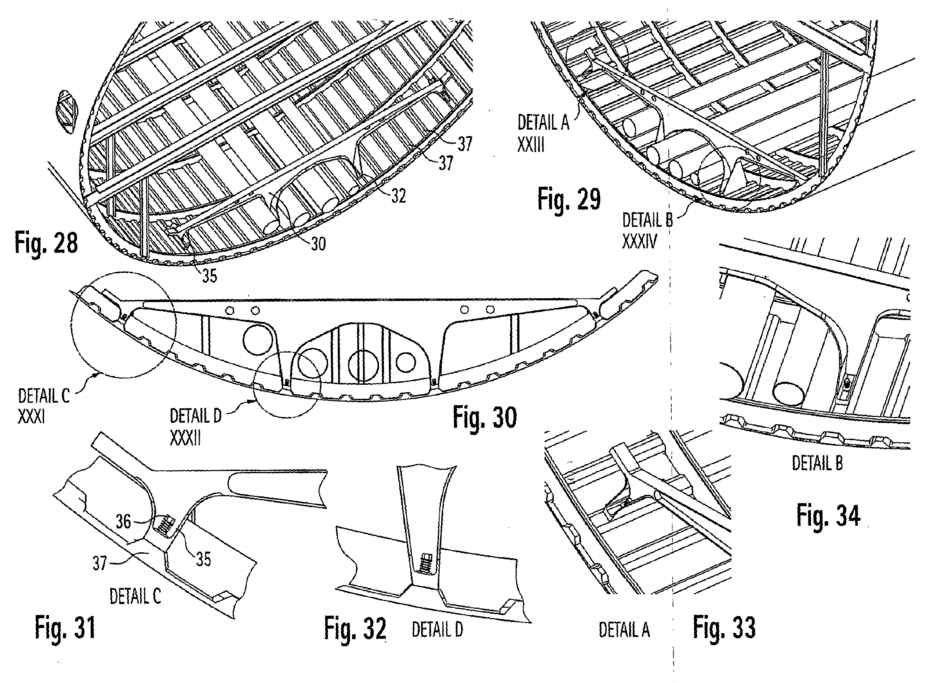

Die in den Fig. 28 - 34 gezeigte Ausführungsform der Erfindung zeichnet sich dadurch aus, dass das Längsprofil 35 als "Schuh" ausgebildet ist, der direkt am Querträger 30 befestigt bzw. einstückig mit diesem ausgeformt ist. Dieser "Schuh" ist auf der Längsversteifung 37 - wie in den Fig. 31 - 34 besonders gut sichtbar - über die Befestigungselemente 36 befestigt. Wie in den Abbildungen gezeigt gilt dies auch für die Füße 32 des Querträgers 30.

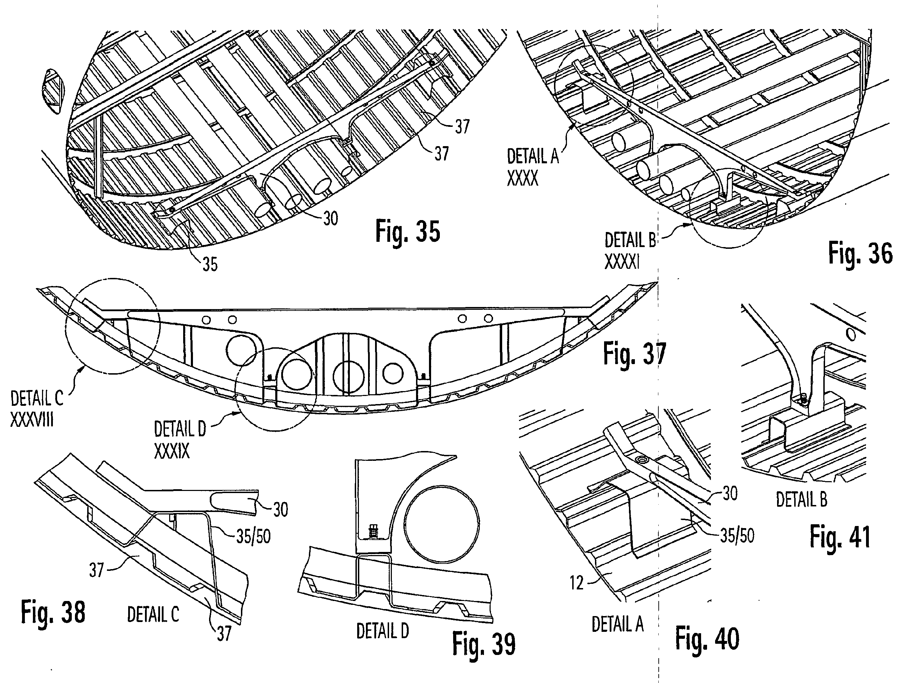

Bei der in den Fig. 35 - 41 gezeigten Ausführungsform der Erfindung sind die Längsprofile 35 insgesamt zwei Längsversteifungen 32 überspannend ausgebildet. Die Längsprofile 35 können hierbei entweder über die gesamte Länge des Flugzeuginnenraums geführt oder aber nur als kurze Abschnitte (wie in den Fig. 35 und 36 ersichtlich) als kurze, schuhförmige Abschnitte ausgebildet sein. Sie stellen dann sozusagen Zwischenelemente 50 dar, durch welche Längskräfte direkt auf die Außenhaut 12 abgeleitet werden.

An dieser Stelle sei nochmals betont, dass ein wesentlicher Punkt darin liegt, dass die Längskräfte über den gesamten Bodenbereich eingeleitet und (statisch bestimmt) an Endecken der Bodenmodule bzw. an Enden der Querträger in die Außenhaut eingeleitet werden.

### Bezugszeichenliste

- 1: Erster Rumpfabschnitt
- 2: Zweiter Rumpfabschnitt
- 8: Oberer Abschnitt
- 9: Frachtraum
- 10: Flugzeugrumpf
- 11: Spanten
- 12: Außenhaut
- 13: Installationskanal
- 14: Frachtraumtür
- 15: I-Stecker
- 16: Drainageleitung
- 20: Deckabschnitt
- 21: Kugelmatte
- 22: Bodenpaneel
- 23: Rollenbahn/Profilelement
- 24: Verbindungselement
- 25: Randprofil
- 26: Zugangsöffnung
- 27: Lining-/Ceiling
- 30: Querträger
- 31: Fuß
- 32: Fuß
- 33: Auflage
- 34: Kragen
- 35: Längsprofil
- 36, 36': Befestigungselement
- 37: Längsversteifung
- 40: Kugelelement
- 41: Führungselement
- 42: PDU
- 43: Rolle
- 44: Riegel
- 50: Zwischenelement
- 51: Außenkoppelstück
- 52: Innenkoppelstück
- 53: Verbindungsstück
- 54: Außenlappen

## Patentansprüche

1. Frachtdeck zur Aufnahme von Ladung im Frachtraum (9) eines Flugzeugs, wobei an der Außenhaut (12) des Flugzeugs Längsträger (35) montierbar sind,
**dadurch gekennzeichnet, dass**
das Frachtdeck aus einer Vielzahl von Bodenmodulen (20) aufgebaut ist, die im Frachtraum (9) befestigbar sind und das Frachtdeck bilden, wobei die Bodenmodule (20) an den Längsträgern (35) montiert sind.

2. Frachtdeck nach Anspruch 1, **dadurch gekennzeichnet, dass**
die Außenhaut (12) des Flugzeugs Spanten (11) aufweist und an diesen die Längsträger (35) befestigbar sind.

3. Frachtdeck nach Anspruch 1 oder 2,
**dadurch gekennzeichnet, dass**
die Längsträger (35) aus einem Material bestehen, dessen Temperaturausdehnungskoeffizient im Wesentlichen demjenigen der Außenhaut (12) des Flugzeugs entspricht.

4. Frachtdeck nach einem der vorhergehenden Ansprüche,
**dadurch gekennzeichnet, dass**
die Längsträger (35) Bohrungen, Schnellverschlusselemente oder dergleichen Befestigungseinrichtungen (36, 36') zum Befestigen der Bodenmodule (20) aufweisen.

5. Frachtdeck nach einem der vorhergehenden Ansprüche,
**dadurch gekennzeichnet, dass**
die Bodenmodule (20) derart an den Längsträgern (35) befestigt sind, dass im Wesentlichen keine Kräfte in einer Längsrichtung des Flugzeugs von den Bodenmodulen (20) in die Längsträger (35) einleitbar sind.

6. Frachtdeck nach einem der vorhergehenden Ansprüche,
**dadurch gekennzeichnet, dass**
ein Paar von Längsträgern (35) zur Verbindung mit den Bodenmodulen (20) vorgesehen ist.

7. Frachtdeck nach einem der vorhergehenden Ansprüche,
**dadurch gekennzeichnet, dass**
die Bodenmodule (20) Querträger (30) zur Befestigung der Bodenmodule (20) an den Längsträgern (35) umfassen.

8. Frachtdeck nach Anspruch 6,
**dadurch gekennzeichnet, dass**
die Bodenmodule (20) Stützfüße (31, 32) zur Befestigung an den Spanten (11) umfassen.

9. Frachtdeck nach einem der vorhergehenden Ansprüche,
**dadurch gekennzeichnet, dass**
der Längsträger (35) Befestigungselemente umfassen, die entweder in einer Zone zwischen der Außenhaut (11) und einem in den Frachtraum (9) gerichteten Randbereich der Spanten (11) an den Spanten oder bohrungsfrei am Randbereich der Spanten angebracht sind.

10. Frachtdeck nach einem der vorhergehenden Ansprüche,
**dadurch gekennzeichnet, dass**
die Module (20) in Bezug auf Kräfte in Längsrichtung des Flugzeugs voneinander entkoppelt sind.

11. Verfahren zur Montage eines aus Bodenmodulen bestehenden Frachtdecks in einem Flugzeug, wobei das Flugzeug aus mehreren tonnenförmigen Rumpfabschnitten einer Außenhaut zusammengebaut wird, umfassend mindestens die Schritte:
a) Herstellen von Bodenmodulen;
b) Herstellen von Längsträgern einschließlich eines Anbringens von Bohrungen, Schnellverschlusselementen oder dergleichen Befestigungseinrichtungen zum Befestigen der Bodenmodule an den Längsträgern;
c) Befestigen von Abschnitten der Längsträger in den Rumpfabschnitten;
d) Einsetzen der Bodenmodule in die Rumpfabschnitte und Befestigen derselben an den Längsträgern.

12. Verfahren nach Anspruch 11,
wobei die Längsträger eine Länge aufweisen, die nicht größer ist als die der Rumpfmodule.

13. Verfahren nach einem der Ansprüche 11 oder 12,
wobei nach dem Schritt d) in einem Schritt e) Füße von Querträgern an Spanten befestigt werden.

14. Verfahren nach einem der Ansprüche 11 - 13,
wobei nach dem Schritt e) Lining- und Ceiling-Elemente in die Rumpfabschnitte eingeschoben und dort befestigt werden.

15. Verfahren nach einem der Ansprüche 11 - 14,
wobei Bodenmodule nach einem Zusammenbau der Rumpfabschnitte durch eine Frachtraumtür eingeladen, an jeweilige Bestimmungsorte transportiert und dort befestigt werden.

16. Verfahren nach einem der Ansprüche 11 - 15,
wobei die Bodenmodule vor dem Schritt d) mit Leitungsabschnitten für Fluide oder Strom oder Kanälen zum Verlegen von Leitungen oder mit dergleichen Installationseinrichtungen versehen und die Installationseinrichtungen nach dem Schritt c) miteinander verbunden werden.

17. Verfahren nach Anspruch 13,
wobei mindestens Teile von Bodenpaneelen, Kugelmatten oder dergleichen Deckabschnitten der Module nach dem Schritt e) an den Modulen befestigt werden.

## Claims

1. Cargo deck to receive loads in the cargo compartment (9) of an aircraft such that longitudinal beams (35) can be attached to the outer skin (12) of the aircraft,
**characterized in that**
the cargo deck is composed of a plurality of floor modules (20) that can be fixed in position within the cargo compartment (9) and form the cargo deck, the floor modules (20) being mounted on the longitudinal beams (35).

2. Cargo deck according to Claim 1,
**characterized in that** the outer skin (12) of the aircraft comprises ribs (11), and the longitudinal beams (35) can be fastened thereto.

3. Cargo deck according to Claim 1 or 2,
**characterized in that** the longitudinal beams (35) are made of a material, the thermal expansion coefficient of which corresponds substantially to that of the outer skin (12) of the aircraft.

4. Cargo deck according to one of the preceding claims,
**characterized in that** the longitudinal beams (35) comprise bores, rapid-closure elements or similar fixation devices (36, 36') for attachment of the floor modules (20).

5. Cargo deck according to one of the preceding claims,
**characterized in that** the floor modules (20) are attached to the longitudinal beams (35) in such a way that substantially no forces acting in a longitudinal direction of the aircraft can be transferred from the floor modules (20) into the longitudinal beams (35).

6. Cargo deck according to one of the preceding claims,
**characterized in that** a pair of longitudinal beams (35) is provided to be connected to the floor modules (20).

7. Cargo deck according to one of the preceding claims,
**characterized in that** the floor modules (20) comprise transverse beams (30) for connecting the floor modules (20) to the longitudinal beams (35).

8. Cargo deck according to Claim 6,
**characterized in that** the floor modules (20) comprise supporting feet (31, 32) for connection to the ribs (11).

9. Cargo deck according to one of the preceding claims,
**characterized in that** the longitudinal beams (35) comprise fixation elements that are attached either to the ribs in a zone between the outer skin (12) and an edge region of the ribs (11) that is directed into the cargo compartment (9), or are attached without bores to the edge region of the ribs.

10. Cargo deck according to one of the preceding claims,
**characterized in that** the modules (20) are decoupled from one another with respect to forces acting in the long direction of the aircraft.

11. Method of installing a cargo deck that consists of floor modules in an aircraft that is composed of multiple barrel-shaped fuselage sections of an outer skin, comprising at least the steps
a) production of floor modules;
b) production of longitudinal beams, including the provision of bores, rapid-closure elements or similar fixation devices for attaching the floor modules to the longitudinal beams;
c) fixation of sections of the longitudinal beams within the fuselage sections;
d) insertion of the floor modules into the fuselage sections, and attaching them to the longitudinal beams.

12. Method according to Claim 11,
wherein the longitudinal beams have a length no greater than that of the fuselage module.

13. Method according to one of the claims 11 or 12,
wherein after the step d), in a step e) feet of transverse beams are fixed to ribs.

14. Method according to one of the claims 11-13,
wherein after the step e) wall and ceiling lining elements are pushed into the fuselage sections and fixed in position there.

15. Method according to one of the claims 11-14,
wherein after assembly of the fuselage sections, floor modules are loaded in through a cargo-compartment door, transported to their associated destination sites, and fixed in position there.

16. Method according to one of the claims 11-15,
wherein prior to the step d) the floor modules are provided with conductor sections for fluids or electrical current, or with channels through which leads can pass, or with similar installation devices, and the installation devices are connected to one another after the step c).

17. Method according to Claim 13,
wherein at least parts of floor panels, ball mats or similar deck sections of the modules are fixed to the modules after the step e).

## Revendications

1. Pont de chargement pour le chargement d'une soute à fret (9) d'un avion, moyennant quoi des longerons (35) peuvent être montés sur l'enveloppe externe (12) de l'avion, **caractérisé en ce que** le pont de chargement est constitué d'une pluralité de modules de plancher (20) pouvant être fixés dans la soute à fret (9) et qui constituent le pont de chargement, moyennant quoi les modules de plancher (20) sont montés sur les longerons (35).

2. Pont de chargement selon la revendication 1, **caractérisé en ce que** l'enveloppe externe (12) de l'avion comprend des membrures (11) et **en ce que** les longerons (35) peuvent être fixés à celles-ci.

3. Pont de chargement selon la revendication 1 ou 2, **caractérisé en ce que** les longerons (35) sont constitués d'un matériau dont le coefficient de dilatation thermique correspond sensiblement à celui de l'enveloppe externe (12) de l'avion.

4. Pont de chargement selon l'une des revendications précédentes, **caractérisé en ce que** les longerons (35) comprennent des alésages, des éléments à fermeture rapide ou d'autres dispositifs de fixation (36, 36') pour la fixation des modules de plancher (20).

5. Pont de chargement selon l'une des revendications précédentes, **caractérisé en ce que** les modules de plancher (20) sont fixés aux longerons (35) de façon à ce que sensiblement aucune force ne puisse être transmise dans une direction longitudinale de l'avion des modules de plancher (20) aux longerons (35).

6. Pont de chargement selon l'une des revendications précédentes, **caractérisé en ce qu'**une paire de longerons (35) est prévue pour une liaison avec les modules de plancher (20).

7. Pont de chargement selon l'une des revendications précédentes, **caractérisé en ce que** les modules de plancher (20) comprennent des barres transversales (30) pour la fixation des modules de plancher (20) aux longerons (35).

8. Pont de chargement selon la revendication 6 **caractérisé en ce que** les modules de plancher (20) comprennent des pieds d'appui (31, 32) pour la fixation aux membrures (11).

9. Pont de chargement selon l'une des revendications précédentes, **caractérisé en ce que** les longerons (35) comprennent des éléments de fixation qui sont appliqués dans une zone entre l'enveloppe externe (11) et une zone de bord des membrures (11) orientée vers la soute à fret (9), sur les membrures ou sans perçage dans la zone de bord des membrures.

10. Pont de chargement selon l'une des revendications précédentes, **caractérisé en ce que** les modules de plancher (20) sont découplés les uns des autres en ce qui concerne les forces dans la direction longitudinale de l'avion.

11. Procédé de montage d'un pont de, chargement constitué de modules de plancher dans un avion, moyennant quoi l'avion est constitué de plusieurs sections de carlingue en forme de tonneau avec une enveloppe externe, comprenant au moins les étapes suivantes :
a) fabrication de modules de plancher ;
b) fabrication de longerons et réalisation d'alésages, d'éléments à fermeture rapide ou d'autres dispositifs de fixation permettant de fixer les modules de plancher sur les longerons ;
c) fixation de sections de longerons dans les sections de carlingue ;
d) insertion des modules de plancher dans les sections de carlingue et fixation de ceux-ci aux longerons.

12. Procédé selon la revendication 11, moyennant quoi les longerons présentent une longueur non supérieure à celle des modules de la carlingue.

13. Procédé selon l'une des revendication 11 ou 12, moyennant quoi, après l'étape d), dans une étape e), des pieds de barres transversales sont fixés aux membrures.

14. Procédé selon l'une des revendication 11 à 13, moyennant quoi, après l'étape e), des éléments de revêtement et de plafond sont insérés dans les sections de la carlingue et fixés à celles-ci.

15. Procédé selon l'une des revendication 11 à 14, moyennant quoi des modules de plancher sont chargés après l'assemblage des sections de la carlingue par une porte de la soute à fret, positionnés à leurs différents lieux de destination respectifs et fixés.

16. Procédé selon l'une des revendication 11 à 15, moyennant quoi les modules de plancher sont équipés, avant l'étape d), de sections de conduites pour des fluides, du courant ou de canaux pour la pose de conduites ou d'autres installations et ces installations sont reliées entre elles après l'étape c).

17. Procédé selon la revendication 13, moyennant quoi au moins une partie des panneaux du plancher ou d'autres section des modules sont fixés aux modules après l'étape e).
